**Europäisches Patentamt**

**European Patent Office**

**Office européen des brevets**

(19)

(11) Veröffentlichungsnummer : **0 346 278 B1**

(12)

# EUROPÄISCHE PATENTSCHRIFT

(45) Veröffentlichungstag der Patentschrift :
26.02.92 Patentblatt 92/09

(51) Int. Cl.⁵ : **A01C 1/06, B02B 1/06**

(21) Anmeldenummer : **89810398.1**

(22) Anmeldetag : **29.05.89**

(54) **Vorrichtung zum Benetzen von Saatgut.**

(30) Priorität : **06.06.88 CH 2140/88**

(43) Veröffentlichungstag der Anmeldung :
**13.12.89 Patentblatt 89/50**

(45) Bekanntmachung des Hinweises auf die
Patenterteilung :
**26.02.92 Patentblatt 92/09**

(84) Benannte Vertragsstaaten :
**AT CH DE ES FR GB IT LI SE**

(56) Entgegenhaltungen :
**CH-A- 487 673**
**DE-A- 3 239 867**
**FR-A- 2 297 791**
**GB-A- 480 203**
**US-A- 3 155 542**

(73) Patentinhaber : **CIBA-GEIGY AG**
**Klybeckstrasse 141**
**CH-4002 Basel (CH)**

(72) Erfinder : **McCracken, Alan**
**Tellerweg 30**
**CH-4102 Binningen (CH)**

**Beschreibung**

Die Erfindung betrifft eine Vorrichtung gemäss Oberbegriff des Patentanspruchs 1.

Saatgut wird in der Landwirtschaft zum Schutz gegen Pilzbefall, gegen Insekten, gegen Fäulnis oder Aehnlichem chemisch behandelt. Dazu wird in geeigneten Vorrichtungen das Saatgut gleichmässig mit einer Flüssigkeit benetzt, die den benötigten Wirkstoff enthält. Die gleichmässige Verteilung des Wirkstoffes ist wichtig, denn sowohl eine zu hohe als auch zu niedrige Konzentration gefährdet das Saatgut, einmal durch den Wirkstoff selbst, zum anderen durch Ausbleiben der Wirkung. Deswegen wird zunächst für einen gleichmässigen Fluss des Saatgutes gesorgt, beispielsweise mit Rüttelsieben auf ein Förderband. Anschliessend wird das gleichmässig verteilte Material auf dem Förderband mit dem Wirkstoff benetzt. Es ist ebenso möglich, das Saatgut während des Falls in einem Schacht zu benetzen.

Nicht jedes Saatgut kann aber auf einfache Weise für einen gleichförmigen Materialfluss getrennt werden. Baumwollsamen z.B. weisen auf ihrer Aussenhaut Härchen auf mit der Wirkung, dass das Saatgut Klumpen bildet und nicht mehr nach den üblichen Verfahren behandelt werden kann. Aus diesem Grund werden die Samen in einem ersten Arbeitsschritt enthaart, um so die nötigen Materialflusseigenschaften zu erhalten. Zur Enthaarung wird üblicherweise Schwefelsäure oder auch Salzsäure verwendet; ein anderes Verfahren ist das Flämmen. Nach der Enthaarung können Baumwollsamen wie beschrieben bearbeitet werden.

In der DE-A-3,239,867 ist beispielsweise eine Vorrichtung zum Beizen von enthaartem Saatgut beschrieben, entsprechend dem ersten Teil des Anspruchs 1, bei der das Saatgut durch die Schleuderwirkung eines in Rotation versetzbaren Körnerschleudertellers, der Teil einer Dosiereinrichtung ist, in einem Behandlungsraum zu einem gleichmässigen Schleier verteilt wird. Unmittelbar unter dem Körnerschleuderteller ist ein Sprühteller angeordnet, der die flüssigen Beizmittel fein in diesen Schleier verteilt. Durch die Eigenbewegung des enthaarten Saatgutes in diesem Sprühnebel wird die Oberfläche jedes Saatkorns relativ gleichmässig benetzt.

In der US-A-3,155,542 ist eine Beizvorrichtung für Baumwollsamen beschrieben. Bei dieser Vorrichtung werden die Baumwollsamen über eine vertikal angeordnete Förderschnecke in eine Behandlungskammer eingebracht. Dort fallen sie auf einen rotierbaren Schleuderkegel, der die Baumwollsamen nach aussen gegen die Kammerwandung schleudert. Unterhalb des Schleuderkegels ist eine rotierbare Sprühscheibe angeordnet, welche einen feinen Nebel von Beizmittel erzeugt. Im Fallen treten die Baumwollsamen durch diesen Nebel hindurch, wobei ihre Oberfläche benetzt wird. Um ein Verklumpen von nicht vollständig enthaarten Baumwollsamen zu vermeiden, sind links und rechts der Förderschnecke je ein spatelartig ausgebildeter Arm als Schikane angeordnet, welche in der Förderschnecke ragen und die verklumpten Baumwollsamen trennen sollen. Auf diese Weise werden zwar grössere Klumpen zerkleinert, aber die nicht vollständig enthaarten Baumwollsamen können nicht vereinzelt werden.

Für nasse Böden wirkt sich oft die Enthaarung ungünstig nach der Aussaat aus, denn die Härchen schützen den Samen vor zu viel Feuchtigkeit. Aus diesem Grund wird vielfach gänzlich auf das Enthaaren verzichtet.

Für das Benetzen und Beizen nicht enthaarten Baumwollsaatguts werden besondere Maschinen eingesetzt. Zur Trennung der verklumpten Baumwollsamen führt beispielsweise in einer Vorrichtung ein senkrechtes Einfüllrohr in einen Kegelstumpf hinein, dessen unteres Ende in ein breiteres, den Sprühraum bildendes Rohr mündet. Innerhalb des Kegelstumpfes, direkt unter dem Rohrende, ist eine schnell rotierende Scheibe angeordnet, die die eingefüllten Samen gegen die Wände des Kegelstumpfes schleudert, wo sie abprallen und mehr oder weniger gleichmässig verteilt in das Sprührohr fallen. Die Dosierung des Materialflusses wird durch Verändern des Abstands des Tellers zum Endstück des Einfüllrohrs, also durch eine Höhenverstellung des Tellers, gesteuert. Zum Benetzen rotieren im Sprühraum in der Achse der Scheibe zwei weitere Teller, in deren Mitte der flüssige Wirkstoff eingespeist wird. Die Rotation der Teller soll eine feine, tröpfchenförmige Verteilung der Flüssigkeit im Sprühraum bewirken. Unter dem Sprühraum wird mit einer Förderschnecke das Saatgut in eine Kammer transportiert, wo es zusätzlich mechanisch vermischt wird, um die Feuchtigkeit gleichmässiger auf die Oberfläche aller Samenkörner zu verteilen.

Ein wesentliches Problem in der beschriebenen Anordnung bildet der Materialfluss, der sich nur schwer steuern lässt. Ein geringes Absenken der rotierenden Scheiben führt bereits zum Abtrennen noch verklumpter Baumwollsamen. Auch ist das Sprühverfahren nicht befriedigend, da die Baumwollsamen im freien Fall nicht gleichmässig von allen Seiten besprüht werden. Darüberhinaus gelangt zu viel Benetzungsflüssigkeit an die Wände des Sprührohrs und geht damit verloren.

Hier will die Erfindung Abhilfe schaffen. Erfindungsgemäss wird dies durch die im Kennzeichen des Patentanspruchs 1 aufgeführten Merkmale erreicht.

Infolge der begrenzten Tiefe der Förderschnecken auf die Grössenordnung der zu behandelnden Samenkörner wird behaartes Saatgut zuverlässig entklumpt. Durch die mechanische Schikane wird verhindert, dass ausserhalb der Schneckengänge Material gefördert wird. Die Förderschnecken bewirken einen gleichförmigen

EP 0 346 278 B1

und stetigen Materialfluss zum Sprühraum.

Der Einsatz eines Zerstäubers, welcher einen feinen dichten Sprühnebel generiert, ermöglicht das gleichmässige Benetzen des Saatguts von allen Seiten.

Die durch die Kombination von Förderschnecke(n) und Rührwelle(n) gebildete Misch- und Fördervorrichtung, stellt bezüglich Kompaktheit und Wirkung eine Optimallösung dar.

Im folgenden wird die Erfindung anhand eines in den Zeichnungen dargestellten Ausführungsbeispiels näher erläutert. Es zeigen:

Fig. 1 eine Seitenansicht der gesamten Vorrichtung,

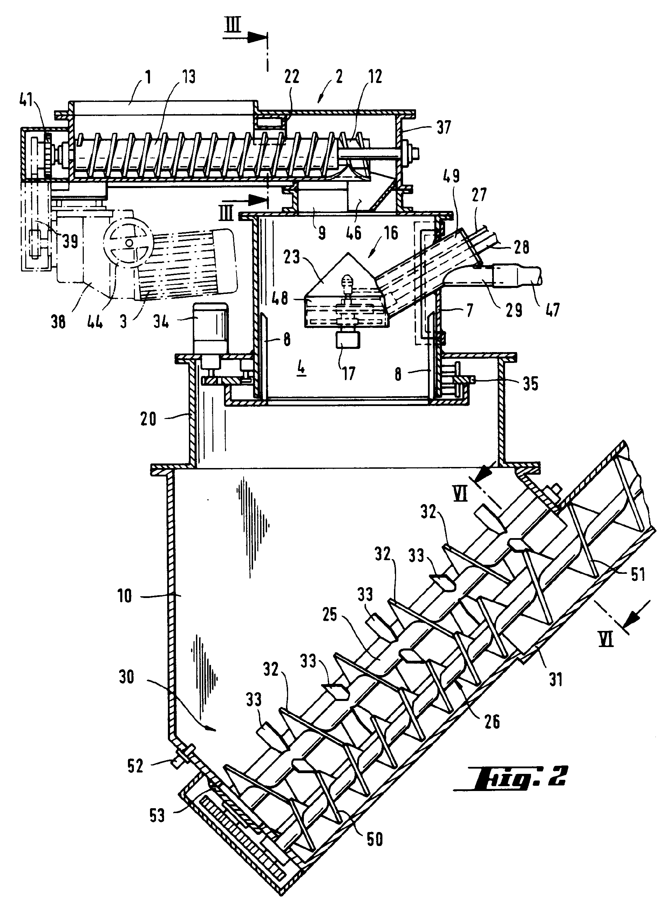

Fig. 2 einen vergrösserten Ausschnitt aus Fig. 1,

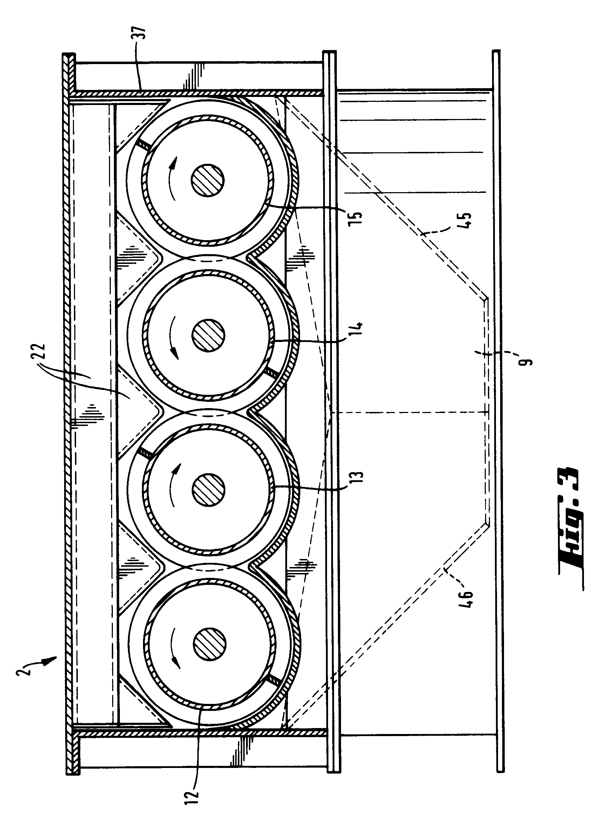

Fig. 3 einen Schnitt längs der Linie III-III der Fig. 2,

Fig. 4 eine Aufsicht auf die in Fig. 1 mit 2 bezeichnete Zuführ- und Dosiervorrichtung

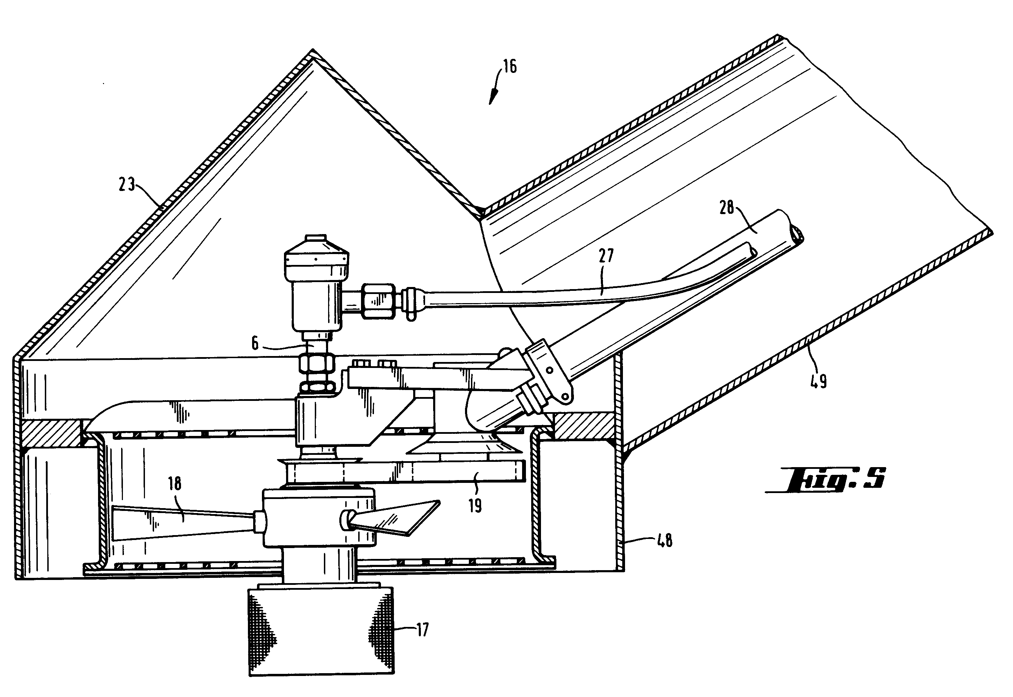

Fig. 5 den Sprühkopf mit dem Rotations-Käfigzerstäuber im Axialschnitt,

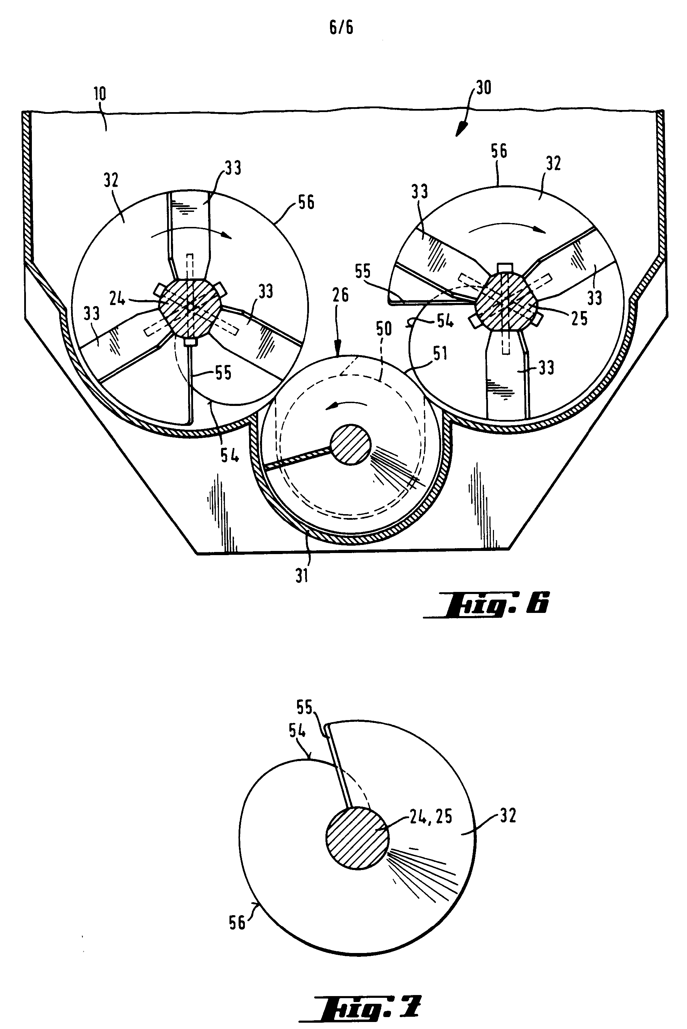

Fig. 6 einen Schnitt längs der Linie VI-VI der Fig. 2 und

Fig. 7 einen Schnitt durch eine modifizierte Mischwelle mit Sicht auf einen Schneckengang.

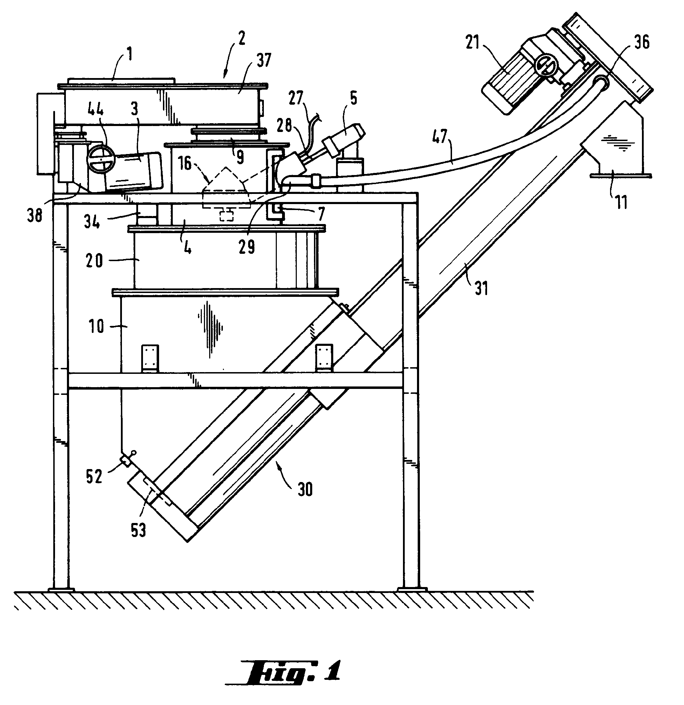

In den Fig. bezeichnen 2 das Zuführ- und Dosiergerät, 4 die Sprühkammer und 10 den Misch- und Förderraum. In Fig. 1 wird der Aufbau der gesamten Vorrichtung deutlich. Eine Einfüllöffnung 1 liegt über dem Zuführ- und Dosiergerät 2, das in die Sprühkammer 4 mündet. Unter der Sprühkammer 4 liegt der Misch- und Förderraum 10, von dem das Saatgut zum Ausgang 11 gefördert wird.

Das Zuführ- und Dosiergerät 2 ist durch einen horizontalen Schneckenförderer, bestehend aus einem Gehäuse 37 und vier Förderschnecken 12-15 gebildet. Oberhalb der Förderschnecken 12-15 befindet sich an ihrem Eingang die Einfüllöffnung 1. Ausgangsseitig enden die Schnecken über der den Eingang der Sprühkammer 4 bildenden Oeffnung 9. Zwischen den Oeffnungen 1 und 9 werden die Förderschnecken 12-15 durch eine durch eine Schikane 22 gebildete Verengung geführt. Bei der Einfüllöffnung 1 sitzen ausserhalb des Gehäuses 37 auf den Wellen der Förderschnecken 12-15 ineinandergreifende Zahnräder 40-43. Sie übertragen die Antriebskräfte, wobei die Welle 15 über einen Zahnriemen 39 von einem Elektromotor 3 angetrieben ist. Ein Getriebe 38 mit einstellbaren Uebersetzungsverhältnis übersetzt die Drehgeschwindigkeit des Motors 3 auf das gewünschte Mass. Zur Regulierung dient ein Handrad 44.

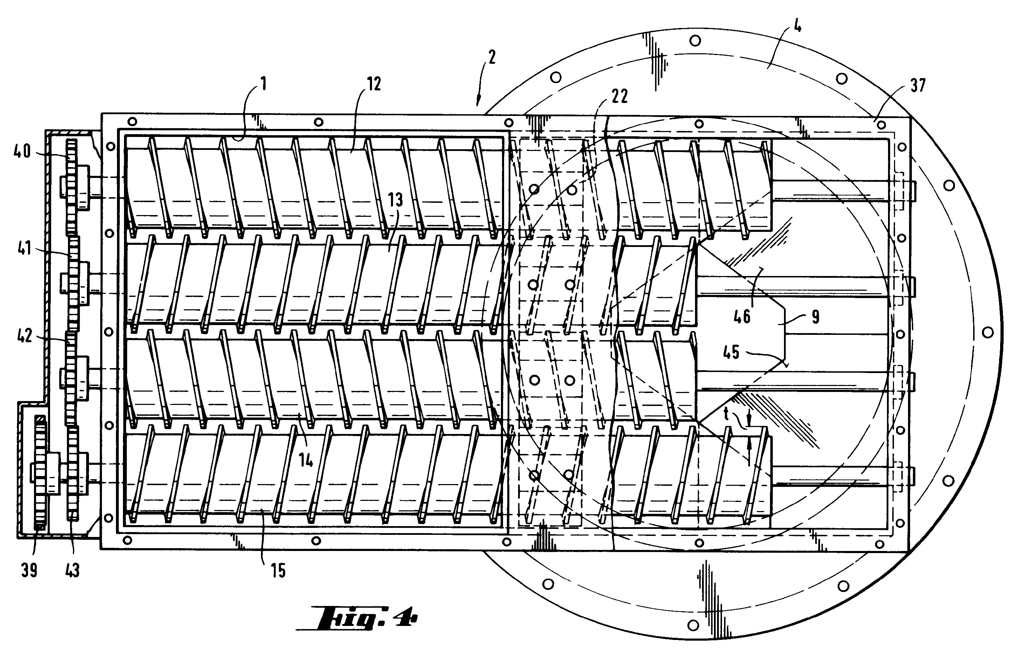

Für die Tiefe t (Fig. 4) der Förderschnecken 12-15 ist im vorliegenden Ausführungsbeispiel der Vorrichtung ein Wert von 18 mm gewählt. Das verklumpte Saatgut wird dann sehr gut getrennt. Gleichzeitig wird eine hohe Fördermenge erreicht. Generell sind Tiefen zwischen ca. 10 mm und 30 mm zweckmässig. Das entspricht etwa der zwei- bis sechsfachen Grösse eines Baumwoll-Samenkorns. Werte bis 50 mm können ebenfalls verwendet werden. Darüberhinaus ist das Auflösen des verklumpten Saatguts und damit später die gleichmässige Verteilung der Wirkstoffe nicht mehr gewährleistet.

Gleichermassen wesentlich für die Abtrennung verklumpten Saatguts ist die Schikane 22 im Gehäuse 37. Kammförmig werden auch die Einschnitte zwischen Förderschnecken bzw. zwischen einer Förderschnecke und der Wand des Gehäuses 37 abgedeckt. Diese Schikane 22 lässt in der vorliegenden Ausführung der Erfindung durch ihre dreieckförmigen Kämme zwischen den Schneckenschultern und der gegenüberliegenden Schikane 22 einen Spalt von nur ca. 10 mm bis 20 mm frei.

Zweck der Schikane 22 ist im wesentlichen das Fördern nur innerhalb der Förderschneckengänge zuzulassen. Die Form der Schikane 22 unkritisch. Die Kämme können etwa halbkreisförmig den Konturen der Wellen folgen, so dass der Abstand zu den Schneckenschultern konstant ist. In diesem Fall ist ein Abstand kleiner als das 5-fache der Grösse eines Samenkorns - bei Baumwolle etwa 20 mm - gut geeignet.

Auf der Unterseite des Schneckenförderers folgt das Gehäuse 37 über der gesamten Länge eng den Konturen der Schnecken 12-15, so dass sich während des Betriebs keine Saatgutrückstände an den Gehäusewänden bilden. Damit werden Reinigungsarbeiten auf ein Minimum reduziert.

Die Förderschnecken 12-15 enden über der Oeffnung 9 zur Sprühkammer 4. Die beiden mittleren Schnecken 13, 14 sind kürzer, wodurch ein gleichmässiges Verteilen über den Querschnitt der Sprühkammer 4 erzielt wird. Zwei Bleche 45, 46 lenken das Saatgut vom Rand des Schneckenförderers zur Mitte in der Oeffnung 9.

Das Gehäuse der Sprühkammer 4 ist durch einen vertikal stehenden Hohlzylinder gebildet. In ihrem Zentrum ist unter einer kegelförmigen Haube 23 und einem kurzen Zylinderstück 48 der Sprühkopf 16 eines tragbaren Sprühgeräts von MICRONAIR AERIAL LTD, Model AU7000 angeordnet. Ueber ein schräg ansteigendes Rohrstück 49 sind Haube 23, Zylinderstück 48 und Sprühkopf 16 an einer Montagetür 7 befestigt. Durch dieses Rohrstück 49 werden Antriebswelle 28 und Zuführleitung 27 des Sprühmittels in die Sprühkammer 4 zum Sprühkopf 16 geführt. Weiterhin erhält ein Ventilator 18 im Sprühkopf 16 seine Ansaugluft durch dieses Rohrstück von einem Lufteintritt 29. Durch Oeffnen der Montagetür 7 kann der Sprühkopf 16 zusammen mit der leicht lösbaren Haube 23 und dem Zylinderstück 48 aus der Sprühkammer 4 zur Reinigung oder Demontage herausgeschwenkt werden.

3

Im Sprühkopf 16 ist unten auf einer vertikalen hohlen Achse ein Rotations-Käfigzerstäuber 17 mit zwei konzentrischen zylinderförmigen Käfigen angeordnet. Der äussere Käfig besteht aus einem feinen Maschendraht (Lochgrösse 1 mm²), der innere Käfig ist durch ein perforiertes Blech gebildet. Darüber sitzt auf derselben Achse der Ventilator 18. Zerstäuber 17 und Ventilator 18 werden gemeinsam über einen Zahnriemen 19 und Antriebswelle 28 von einem ausserhalb der Kammer 4 angeordneten Motor 5 angetrieben.

Im Niveau des Zerstäubers 17 laufen über die Innenseite der Sprühraumwand zwei Schaber 8 und kratzen im Sprühbereich des Zerstäubers 17 Rückstände von der Wand. Die Schaber 8 sind auf einem Zahnkranz 35 befestigt, der von einem Elektromotor 34 angetrieben wird.

Das Sprühgerät erzeugt einen äusserst feinen Sprühnebel, dessen Teilchendurchmesser bei 5000 U/min. im Mittel etwa 100 µm beträgt. (Dieser Wert gilt für Flüssigkeiten mit der Viskosität von Wasser. Zähflüssigere Wirkstoffe bilden entsprechend grössere Tröpfchen.) Der flüssige Wirkstoff gelang dabei über die Zuführleitung 27 und durch die hohle Achse 6 zum Zerstäuber 17. Ein wesentlicher Vorteil des verwendeten Rotations-Käfigzerstäubers besteht darin, dass die Tröpfchenbildung nicht nur in einer Ebene erfolgt wie bei rotierenden Scheiben. Es ist möglich durch einfache konstruktive Massnahmen wie z.B. durch engere Maschen in den Käfigen kleinere Tröpfchen zu erzeugen bzw. bei sehr zähflüssigen Wirkstoffen, Käfige mit grösseren Lochdurchmessern zu verwenden.

Der Lufteintritt 29 des Ventilators 18 ist über einen Schlauch 47 mit einer Oeffnung 36 am Ausgang 11 der gesamten Vorrichtung verbunden. Von dort saugt der Ventilator 18 Luft an und treibt und verwirbelt die radial fortfliegenden Tröpfchen des Zerstäubers 17 nach unten in den Misch- und Förderraum. Dort gelangt die Luft entlang einer Förderschnecke 26 am Ausgang 11 über die Oeffnung 36 zurück. Der entstehende Luftkreislauf verhindert, dass die Luft in der Umgebung der Anlage mit dem Wirkstoff kontaminiert wird.

Während des Betriebs fällt das Saatgut von oben in die Sprühkammer 4 und wird von der Haube 23 nach aussen abgelenkt. Im Niveau des Käfigzerstäubers 17 beginnt die Benetzung. Sie wird durch die vom Ventilator 18 erzeugten Luftwirbel unterstützt. Die benetzten Baumwollsamen fallen durch ein Zwischengehäuse 20 in den Misch- und Förderraum 10.

Der Misch- und Förderraum 10 enthält die Förderschnecke 26, die in einem Winkel von etwa 45° schräg aufwärts zum Ausgang 11 führt. Im Anfangsbereich 50 haben die Schneckengänge nur eine geringe Steigung, im Ausgangsbereich 51 verlaufen sie steiler. Oberhalb der Förderschnecke 26 und parallel zu dieser sind zwei weitere Wellen 24, 25 angeordnet, die wechselweise als Schneckengänge 32 und Paddelmischer 33 ausgebildet sind. Die Schneckengänge 32 verlaufen jeweils nur über einen vollen Umfang der Welle. Daran anschliessend sind drei flügelartige Paddel 23 auf dem Umfang der Welle verteilt. In Drehrichtung gesehen bilden Schneckengangschulter 56 und vordere Kante 54 eines Schneckengangs 32 einen allmählichen abgerundeten, fliessenden Uebergang. Demgegenüber stehen die hintere Kante 55 und Schneckenschulter 56 etwa rechtwinklig aufeinander.

Die Mischwellen 24, 25 sind auf das Innere des Misch- und Förderraums 10 beschränkt. Angetrieben werden sie über Zahnräder von der Förderschnecke 26. Ein Motor 21 treibt am Ausgang 11 über ein gleiches, einstellbares Getriebe wie beim Förder- und Dosiergerät 2 die Förderschnecke 26 an.

Ein handelsüblicher, kapazitiv arbeitender Näherungsschalter 52 verbunden mit einer konventionellen elektrischen Schaltung (nicht dargestellt) schaltet die Misch- und Fördereinrichtung 30 nur ein, wenn eine bestimmte Menge an Saatgut im Misch- und Förderraum 10 vorhanden ist.

Im Misch- und Förderraum 10 werden durch das Vermischen und Verrühren des Saatguts einerseits Ungleichförmigkeiten der Benetzung in der Sprühkammer ausgeglichen und andererseits der sich herabsenkende Sprühnebel verteilt. Für diese Aufgabe können die Mischwellen 24, 25 z.B. auch als reine Paddelmischer ausgebildet sein. Der Aufbau der Mischvorrichtung mit nur einer Mischwelle ist ebenfalls denkbar, ebenso wie unterschiedliche Drehgeschwindigkeiten der einzelnen Wellen.

Während des Mischvorgangs fördert die Schnecke 26 das Saatgut nur langsam in Richtung Ausgang 11. Dieser Materialeinfluss wird unterstützt durch die einzelnen Schneckengänge 32 auf den Mischwellen 24, 25. Weiter oben wird durch die grössere Steigung (51) der Schneckengänge der Materialfluss beschleunigt.

Die Förderschnecke 26 verläuft auf der Unterseite in einer eng tolerierten Rinne, damit sich keine oder nur möglichst geringe Rückstände bilden. Aus dem gleichen Grund ist der Uebergang der Schneckenschulter 56 zu der vorderen Kante 54 der Schneckengänge 32 auf den Mischwellen 24, 25 langsam und fliessend. Bedingt durch das schräge Ansteigen der Förderschnecke 26 bleibt ein kleiner Rest an Saatgut im unteren Ende des Misch- und Förderraums 10 zurück. Dieser Rest kann nach Oeffnen einer Tür 53 entfernt werden. Bei steileren Winkeln wird der Rest grösser. Der Winkel soll 60° nicht überschreiten.

Der Ausgang 11 und der Eingang 1 der Vorrichtung liegen (bedingt durch die Schrägstellung der Förderschnecke 26) im etwa gleichen Niveau. Dadurch kann insbesondere beim Anschluss einer Sack-Abfüllmaschine die Bauhöhe der Gesamtanordnung optimal ausgenützt werden.

**Patentansprüche**

1. Vorrichtung zum Benetzen von Saatgut, insbesondere nicht enthaartem Baumwollsaatgut, mit in Flüssigkeit gelösten Wirkstoffen wie z.B. Insektiziden oder Fungiziden, mit einem Zuführ- und Dosiergerät (2), dessen Mündung von oben her in eine nach unten offene Sprühkammer (4) gerichtet ist, in welcher ein Zerstäuber (17) für den flüssigen Wirkstoff angeordnet ist, und mit Misch- und Austragsmitteln (30) unterhalb der Sprühkammer (4), dadurch gekennzeichnet, dass das Zuführ- und Dosiergerät (2) einen im wesentlichen horizontal angeordneten Schneckenförderer mit mindestens zwei zusammenwirkenden parallelen Förderschnecken (12-15) und eine blendenartige Schikane (22) umfasst, wobei die Förderschneckengänge eine Tiefe (t) in der Grössenordnung der zu behandelnden Saatkörner aufweisen und die Schikane (22) derart angeordnet ist, dass ein Fördern des Saatgutes im wesentlichen nur innerhalb der Förderschneckengänge erfolgt, dass der Zerstäuber (17) ein solcher ist, der eine Teilchengrösse kleiner als 300 μm generiert, und dass die Misch-und Austragsmittel (30) mindestens eine Förderschnecke (26) und mindestens eine parallel hierzu angeordnete flügelartigen Paddeln (33) versehene Mischwelle (24,25) aufweisen.

2. Vorrichtung nach Anspruch 1, dadurch gekennzeichnet, dass die Schneckengänge eine Tiefe des 1,3- bis 10-fachen, vorzugsweise 2- bis 5-fachen der Grösse der zu behandelnden Saatkörner aufweisen, und der Abstand zwischen den Schneckenschultern und dem inneren Rand der Schikane (22) kleiner ist als das 0,5- bis 5-fache der Grösse eines der zu behandelnden Saatkörner.

3. Vorrichtung nach einem der vorangehenden Ansprüche, dadurch gekennzeichnet, dass der Schneckenförderer wenigstens drei oder vier zusammenwirkende parallele Förderschnecken (12-15) auf gleicher Höhe hat und dass die beiden jeweils aussen befindlichen Schnecken (12,15) im Bereich der Mündung in die Sprühkammer (4) länger als die innere(n) Schnecke(n) (13,14) sind bzw. mit ihrem Ende weiter vorstehen.

4. Vorrichtung nach einem oder mehreren der vorangehenden Ansprüche, dadurch gekennzeichnet, dass der Zerstäuber (17) ein Rotationszerstäuber mit zwei koaxialen Käfigen ist.

5. Vorrichtung nach einem oder mehreren der vorangehenden Ansprüche, dadurch gekennzeichnet, dass die Sprühkammer (4) kreiszylindrisch ist.

6. Vorrichtung nach einem oder mehreren der vorangehenden Ansprüche, dadurch gekennzeichnet, dass wenigstens ein Ventilator (18) zur Erzeugung von Luftturbulenzen in der Sprühkammer (4) vorgesehen ist.

7. Vorrichtung nach Anspruch 6, dadurch gekennzeichnet, dass der Ventilator (18) in der Sprühkammer (4) oberhalb des Zerstäubers (17) angeordnet ist.

8. Vorrichtung nach Anspruch 7, dadurch gekennzeichnet, dass der Ventilator (18) so angeordnet ist, dass der von ihm erzeugte Luftstrom auf den Zerstäuber (17) gerichtet ist und diesen umspült.

9. Vorrichtung nach einem oder mehreren der vorangehenden Ansprüche, dadurch gekennzeichnet, dass zumindest in dem im Sprühbereich des Zerstäubers (17) liegenden Wandbereich der Sprühkammer (4) mindestens ein auf diesen Wandbereich wirkender Schaber (8) umlaufend antreibbar angeordnet ist.

10. Vorrichtung nach einem oder mehreren der vorangehenden Ansprüche, dadurch gekennzeichnet, dass oberhalb des Zerstäubers (17) und/oder des Ventilators (18) eine etwa kegelförmige Abdeckung (23) angeordnet ist.

11. Vorrichtung nach Anspruch 10, dadurch gekennzeichnet, dass die Abdeckung (23) leicht lösbar montiert ist.

12. Vorrichtung nach einem oder mehreren der vorangehenden Ansprüche, dadurch gekennzeichnet, dass der Zerstäuber (17) und gegebenenfalls der Ventilator (18) sowie die Abdeckung (23) an einer einen Teil der Wandung bildenden Montagetür oder Klappe (7) der Sprühkammer (4) befestigt und mit dieser Tür nach deren Entriegelung nach aussen schwenkbar ist/sind.

13. Vorrichtung nach einem oder mehreren der vorangehenden Ansprüche, dadurch gekennzeichnet, dass die Misch- und Austragsmittel (30) eine Förderschnecke (26) und mindestens eine parallel dazu angeordnete, mit Paddeln (33) versehene Mischwelle (24,25) aufweisen, wobei Förderschnecke und Mischwelle in einem nach oben in die Sprühkammer offenen, angepassten rinnenförmigen Gehäuse (31) angeordnet sind.

14. Vorrichtung nach Anspruch 13, dadurch gekennzeichnet, dass zwei Paddel-Rührwellen (24,25) im gleichen Niveau und parallel zueinander oberhalb der Förderschnecke (26) angeordnet sind.

15. Vorrichtung nach einem oder mehreren der Ansprüche 1 bis 12, dadurch gekennzeichnet, dass die Misch- und Austragsmittel (30) mindestens eine Mischwelle (24,25) enthalten, welche alternierend mit Schneckengängen (32) und mit Paddeln (33) besetzt ist, wobei diese Mischwelle(n) in einem nach oben in die Sprühkammer (4) offenen, angepassten rinnenförmigen Gehäuse (31) angeordnet ist/sind.

16. Vorrichtung nach Anspruch 15, dadurch gekennzeichnet, dass die Schneckengangteile (32) solche von 380° sind.

17. Vorrichtung nach einem oder mehreren der vorangehenden Ansprüche, dadurch gekennzeichnet, dass die Förderschnecke (26) und die Paddel-Mischwelle(n) (24,25) bzw. das diese Anordnung nach unten abschliessende, angepasste rinnenförmige Gehäuse (31) zum Austritt (11) hin schräg nach oben ansteigend ist.

18. Vorrichtung nach Anspruch 17, dadurch gekennzeichnet, dass die Steigung in einem Winkelbereich von 30° bis 60°, vorzugsweise von 35° bis 45° verläuft.

19. Vorrichtung nach einem oder mehreren der vorangehenden Ansprüche, dadurch gekennzeichnet, dass die Sprühkammer (4) für den Ventilator (18) einen Lufteintritt (29) aufweist, der mit einem Luftaustritt (36) am Ende der zu den Misch- und Fördermittel gehörenden Förderschnecke (26) verbunden ist, so dass für die durch die Sprühkammer geförderte Luft ein geschlossenes System gebildet ist.

20. Vorrichtung nach einem oder mehreren der Ansprüche 15-18, dadurch gekennzeichnet, dass die vordere Kante (54) der Schneckengänge (32) und die Schneckengangschulter (56) fliessend abgerundet ineinander übergehen.

## Claims

1. Apparatus for the wetting of seeds, especially cotton seeds that have not been delinted, with active ingredients, for example insecticides or fungicides, dissolved in a liquid, said apparatus comprising a feeder and metering device (2), the opening of which is directed from above into a spray chamber (4) having an open bottom, in which spray chamber (4) there is arranged an atomizer (17) for the liquid active ingredient, and comprising a mixing and discharge means (30) under the spray chamber (4), wherein the feeder and metering device (2) includes a substantially horizontal screw conveyor comprising at least two mutually cooperating parallel conveyor screws (12-15) and a diaphragm-like baffle (22), the turns of the conveyor screws having a depth (t) of the order of magnitude of the seeds to be treated and the baffle (22) being so arranged that feeding of the seeds takes place substantially only within the turns of the conveyor screws, the atomizer (17) is of the kind that generates a particle size of less than 300 μm, and the mixing and discharge means (30) includes at least one conveyor screw (26) and at least one mixer shaft (24, 25) that is located parallel to said conveyor screw (26) and is equipped with wing-like paddles (33).

2. Apparatus according to claim 1, wherein the screw turns have a depth of 1.3 to 10 times, preferably 2 to 5 times, the size of the seeds to be treated, and the distance between the shoulders of the screws and the inner edge of the baffle (22) is less than 0.5 to 5 times the size of a seed to be treated.

3. Apparatus according to any one of the preceding claims, wherein the screw conveyor comprises at least three or four mutually cooperating parallel conveyor screws (12-15) at the same level, and in the region of the opening into the spray chamber (4) the two outside screws (12, 15) are longer than the inner screw(s) (13, 14), or their ends project further.

4. Apparatus according to one or more of the preceding claims, wherein the atomizer (17) is a rotating atomizer with two coaxial cages.

5. Apparatus according to one or more of the preceding claims, wherein the spray chamber (4) is circular cylindrical.

6. Apparatus according to one or more of the preceding claims, wherein at least one blower (18) is provided to produce air turbulence in the spray chamber (4).

7. Apparatus according to claim 6, wherein the blower (18) is located in the spray chamber (4) above the atomizer (17).

8. Apparatus according to claim 7, wherein the blower (18) is so arranged that the air stream produced by it is directed at the atomizer (17) and flows around it.

9. Apparatus according to one or more of the preceding claims, wherein at least in the wall zone of the spray chamber (4) located within the spraying range of the atomizer (17) there is arranged so that it can be driven in rotation at least one scraper (8) acting on said wall zone.

10. Apparatus according to one or more of the preceding claims, wherein above the atomizer (17) and/or the blower (18) an approximately conical cover (23) is located.

11. Apparatus according to claim 10, wherein the cover (23) is mounted in a readily removable manner.

12. Apparatus according to one or more of the preceding claims, wherein the atomizer (17) and, where appropriate, the blower (18) and the cover (23) is/are mounted on an assembly door or flap (7) of the spray chamber (4) forming a portion of the wall and is/are pivotable outwards together with said door after the door has been unlocked.

13. Apparatus according to one or more of the preceding claims, wherein the mixing and discharge means (30) comprises a conveyor screw (26) and at least one mixer shaft (24, 25) that is located parallel to said conveyor screw (26) and is equipped with paddles (33), the conveyor screw and the mixer shaft being located in an appropriately shaped channel-like housing (31) that is open at the top into the spray chamber.

6

14. Apparatus according to claim 13, wherein two paddle agitator shafts (24, 25) are located at the same level and parallel to each other above the conveyor screw (26).

15. Apparatus according to one or more of claims 1 to 12, wherein the mixing and discharge means (30) includes at least one mixer shaft (24, 25) carrying alternating screw turns (32) and paddles (33), said mixer shaft(s) being located in an appropriately shaped channel-like housing (31) that is open at the top into the spray chamber (4).

16. Apparatus according to claim 15, wherein the screw turn portions (32) are of 380°.

17. Apparatus according to one or more of the preceding claims, wherein the conveyor screw (26) and the paddle mixer shaft(s) (24, 25), or the appropriately shaped channel-like housing (31) closing off that arrangement at the bottom, rise obliquely upward towards the outlet (11).

18. Apparatus according to claim 17, wherein said rise is within a range of angles of 30° to 60°, preferably 35° to 45°.

19. Apparatus according to one or more of the preceding claims, wherein the spray chamber (4) has an air inlet (29) for the blower (18), which air inlet (29) is connected with an air outlet (36) at the end of the conveyor screw (26) belonging to the mixing and discharge means, so that a closed system is formed for the air conveyed through the spray chamber.

20. Apparatus according to one or more of claims 15 to 18, wherein the front edge (54) of the screw turns (32) and the screw turn shoulders (56) pass into one another in a flowing, rounded manner.

## Revendications

1. Installation d'humidification de semences, notamment de graines de coton non débourrées, au moyen d'agents tels que des insecticides ou des fongicides dissous dans un liquide, installation comprenant un mécanisme (2) de chargement et dosage dont l'orifice de sortie est orienté vers le bas et vers une chambre (4) d'atomisation à fond dégagé, dans laquelle est disposé un atomiseur (17) de l'agent liquide et, sous cette chambre (4) d'atomisation, un dispositif (30) de mélangeage et de déchargement, installation caractérisée en ce que le mécanisme (2) de chargement et de dosage comporte un transporteur à vis sensiblement horizontal, composé d'au moins deux vis transporteuses (12-15) parallèles et coopérantes et d'une chicane (22) formant écran, les filets de ces vis ayant une profondeur(t) de l'ordre de grandeur de la grosseur des graines à traiter et cette chicane (22) étant disposée de façon que les graines ne soient transportées que sensiblement entre ces spires ; en ce que l'atomiseur (17) est du genre qui produit des particules de grosseur inférieure à 300 μm ; et en ce que le dispositif (30) de mélangeage et de déchargement comporte au moins une vis transporteuse (26) et au moins un arbre mélangeur (24, 25) qui y est parallèle et qui porte des pales (33) en forme d'ailettes.

2. Installation selon la revendication 1, caractérisée en ce que les vis ont une hauteur comprise entre 1,3 et 10 fois, avantageusement 2 à 5 fois, la grosseur des graines à traiter et la distance comprise entre les arêtes de ces filets et le bord intérieur de la chicane (22) est inférieure à une valeur comprise entre la moitié et le quintuple de la grosseur d'une de ces graines à traiter.

3. Installation selon l'une des revendications précédentes, caractérisée en ce que le transporteur à vis comporte au moins trois ou quatre vis (12-15) parallèles et coopérantes, disposées à la même hauteur, et en ce que les deux vis extérieures (12, 15) sont plus longues que la ou les vis intérieure(s) (13,14) ou les dépassent à l'emplacement du débouché dans la chambre (4) d'atomisation.

4. Installation selon l'une ou plusieurs des revendications précédentes, caractérisée en ce que l'atomiseur (17) est un appareil rotatif à deux cages coaxiales.

5. Installation selon une ou plusieurs des revendications précédentes, caractérisée en ce que la chambre (4) d'atomisation est cylindrique à base circulaire.

6. Installation selon une ou plusieurs des revendications précédentes, caractérisée en ce qu'elle comporte au moins un ventilateur (18) destiné à créer des turbulences de l'air dans la chambre (4) d'atomisation.

7. Installation selon la revendication 6, caractérisé en ce que le ventilateur (18) est disposé dans la chambre (4) d'atomisation au-dessus de l'atomiseur (17).

8. Installation selon la revendication 7, caractérisée en ce que le ventilateur (18) est disposé de façon que le courant d'air qu'il crée soit dirigé sur l'atomiseur (17) et lèche celui-ci.

9. Installation selon une ou plusieurs des revendications précédentes, caractérisée en ce qu'un racleur rotatif (8) au moins, agissant sur la partie de la paroi de la chambre (4) d'atomisation qui est située dans la zone de projection de l'atomiseur (17), est disposé sur au moins cette partie.

10. Installation selon une ou plusieurs des revendications précédentes, caractérisée en ce qu'un capot (23), sensiblement conique, est disposé au-dessus de l'atomiseur (17) et/ou du ventilateur (18).

11. Installation selon la revendication 10, caractérisée en ce que le capot (23) est aisément amovible.

12. Installation selon une ou plusieurs des revendications précédentes, caractérisée en ce que l'atomiseur (17) et éventuellement le ventilateur (18) ainsi que le capot (23)) est ou sont fixé(s) à une porte ou volet (7) qui constitue une partie de la paroi de la chambre (4) d'atomisation et peut/peuvent être rabattu(s) à l'extérieur avec cette porte quand celle-ci a été déverrouillée.

13. Installation selon une ou plusieurs des revendications précédentes, caractérisée en ce que le dispositif (30) de mélangeage et déchargement comporte une vis transporteuse (26) et au moins un arbre mélangeur (24, 25) à ailettes (33), disposé parallèlement à cette vis, cette dernière et cet arbre étant disposés dans un carter (31) ajusté, en forme de gouttière, s'ouvrant en haut vers la chambre d'atomisation.

14. Installation selon la revendication 13, caractérisée en ce que deux arbres (24, 25)d'agitateurs à ailettes sont disposés parallèlement à la même hauteur, plus haut que la vis transporteuse (26).

15. Installation selon une ou plusieurs des revendications 1 à 12, caractérisée en ce que le dispositif (30) de mélangeage et déchargement comporte au moins un arbre mélangeur (24, 25), qui est muni alternativement de filets (32) et d'ailettes (33), ce ou ces arbre(s) (24, 25) étant disposé(s) dans un carter ajusté (31) en forme de gouttière s'ouvrant en haut vers la chambre (4) d'atomisation.

16. Installation selon la revendication 15, caractérisée en ce que les filets (32) couvrent 380°.

17. Installation selon une ou plusieurs des revendications précédentes, caractérisée en ce que la vis transporteuse (26) et les arbres mélangeurs (24, 25) à ailettes, ainsi que le carter ajusté (31) en forme de gouttière qui les referme en-dessous, sont disposés obliquement et remontent vers la sortie (11).

18. Installation selon la revendication 17, caractérisée en ce que l'angle d'inclinaison est compris entre 30° et 60°, avantageusement entre 35° et 45°.

19. Installation selon une ou plusieurs des revendications précédentes, caractérisée en ce que la chambre (4) d'atomisation comporte un raccord (29) d'entrée d'air pour le ventilateur (18), communiquant avec un raccord (36) de sortie d'air, disposé à l'extrémité de la vis transporteuse (26), qui fait partie du dispositif (30) de mélangeage et déchargement, ce qui constitue un circuit fermé pour l'air qui passe dans cette chambre d'atomisation.

20. Installation selon une ou plusieurs des revendications précédentes, caractérisée en ce que le bord antérieur (54) des filets (32) et l'arête (56) de ces filets se transforment progressivement l'un dans l'autre en s'arrondissant.

**Fig. 1**

**_Fig: 2_**

**Fig. 3**

EP 0 346 278 B1

Fig. 4

EP 0 346 278 B1

EP 0 346 278 B1

Fig. 5

13

**Fig. 6**

**Fig. 7**